# EUROPEAN PATENT SPECIFICATION

(11) **EP 0 524 126 B1**
(45) Date of publication and mention of the grant of the patent: **07.06.1995**
(21) Application number: 92500061.4
(22) Date of filing: 18.05.1992
(51) Int. Cl.: A01G 9/22

(54) **Greenhouse with roll-up roof**
Gewächshaus mit Dach-Rolladen
Serre avec store à rouleau de toit

(30) Priority: 15.07.1991 ES 9101649
(43) Date of publication of application: 20.01.1993
(73) Proprietor: INSTITUT DE RECERCA I TECNOLOGIA AGROALIMENTARIES, 08348 Cabrils (Barcelona) (ES)
(72) Inventor: Montero Camacho, Juan I., E-08340 Vilassar de Mar (Barcelona) (ES); Montero Nunez, José, E-08340 Vilassar de Mar (Barcelona) (ES)
(74) Representative: Curell Sunol, Jorge

(56) References cited:
- FR-A- 2 494 957

## Description

The present invention relates to a greenhouse with a roll-up roof according to the preamble of claim 1. The object of the invention being to facilitate the opening and closing operations of the roof appropriate to the insolation and ventilation requirements with regard to the meteorological conditions at any one time.

The document FR-A-2,494,957 refers to an apparatus for the winding of a sheet to cover a greenhouse; the apparatus comprises a geared motor mounted on a device sliding along one of the cross-members between which the sheet is extended; the geared motor is provided with a shaft, which is attached to one end of a wind-up roller that is fastened to a longitudinal edge of the sheet, so that rotation in one direction or another of the geared motor shaft respectively causes the winding up or unwinding of the sheet on or from the roller. The apparatus also comprises an automatic recovery device urging the roller to the position in which the sheet is fully unwound. Notwithstanding, this document does not disclose a device for retaining the roller in the position in which the sheet is fully unwound.

Spanish patent nº 2023570 (application number 9002252) teaches a greenhouse comprising: a stable structure composed substantially of cross-members arranged transversely between supporting lateral uprights; at least one flexible sheet which may be wound up transversely relative to the roof, one of the longitudinal edges of which is attached to a fixed bar and the other longitudinal edge of which is attached to a wind-up roller movable along said cross-members between a position in which the sheet is fully wound up and a position in which it is fully unwound.

Experience has shown that difficulties arise in the prior installation due mainly to the fact that it is hard to synchronize the action of the two motors driving the opening and closing functions of the roof, whereby the correct position of the flexible sheet with the desirable tension is not achieved.

For the above reasons, a greenhouse of the type described above has been devised and it is characterized in that the roof is provided with anchorage members, each of which having a sliding ramp for the wind up roller, a mouth in which the roller may fall while moving to the position in which the sheet is fully unwound, a support bottom and a cavity for temporarily retaining the roller in the position in which the sheet is fully unwound.

Further advantages and features of the invention will be appreciated from the following description in which there is described a preferred embodiment of the invention without any limiting nature and with reference to the accompanying drawings.

Figure 1 is a part perspective view of a greenhouse structure provided with a wind-up flexible sheet covering half of the area of a longitudinal sector of the roof.

Figure 2 is a side elevation view of the said greenhouse structure.

Figure 3 is a view of the geared motor for driving the flexible sheet, the cross-member and sliding device being shown in section.

Figure 4 is a perspective view, partly in section, of the automatic recovery device for winding up the sheet.

Figure 5 is a part schematic elevation view of an anchorage member, the sheet, the wind-up roller, the guide bar and the rotating bar, showing three different positions of the wind-up roller.

In the Figures there is shown a rigid structure for greenhouses, formed by uprights 1 and arcuate cross-members 2 for supporting the roof, the uprights 1 and cross-members 2 being connected by brackets 3, in such a way that the uprights 1 define the side walls of the greenhouse formed by fixed or mobile panels, depending on the different known types. Hereinafter, the transverse direction shall be the one extending along a cross-member and the longitudinal direction shall be the one extending between cross-members.

The invention relates to a roof formed by the said transverse cross-members 2 and by wind-up flexible sheets 4 which may cover the whole of the area of said roof; for each longitudinal sector of the roof (i.e. the space comprised between two contiguous cross-members 2), there may be either a single sheet covering the whole of the sector, or two generally symmetrical sheets, each of which covers approximately the transverse half of the sector.

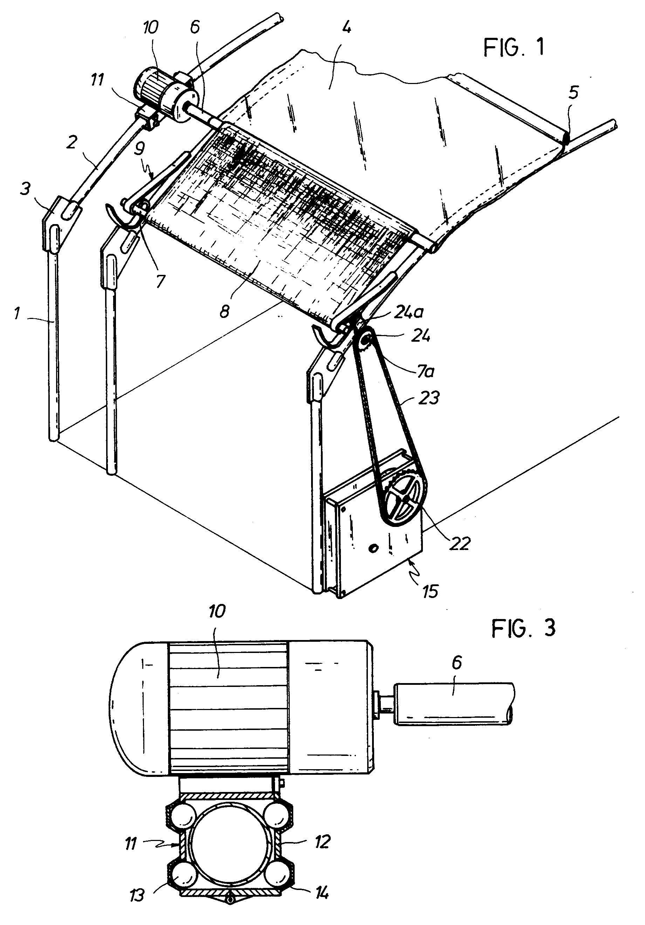

In Figure 1 there is to be seen a longitudinal sector of a roof, half of which may be covered by a flexible sheet 4 having one longitudinal edge attached to a fixed central bar 5, the other longitudinal edge being attached to a roller 6 rotatably movable along the cross-members 2. The movement takes place between a position in which the sheet 4 is fully unwound (in which the latter extends between the centre bar 5 and the longitudinal edge of the roof) and a position in which the sheet 4 is fully wound up, i.e. between the centre bar 5 and the roller 6 situated adjacent the bar 5.

Complementarily there is a preferably resilient draw member 8 which may be formed by one or more cables, cords or tapes, or a hat net. The draw member is preferably provided with a high number of discontinuities, through which it allows a high degree of insolation and/or ventilation of the interior of the greenhouse. One longitudinal edge of the draw member 8 is attached to a rotating bar 7a, around which the draw member 8 may be taken up or let off. The other longitudinal edge of the draw member 8 may be taken up or let off around the roller 6, simultaneously with the flexible sheet 4. A guide bar 7 guides the draw member 8 between the rotating bar 7a and the roller 6.

Adjacent the longitudinal edges of the roof there are anchorage members 9 for retaining the roller 6 in the position in which the sheet 4 is fully unwound and for supporting (preferably with bearings, not shown) the guide bar 7.

A geared motor 10 is provided with a shaft which is attached to one end of the roller 6, such that the rotation of the shaft causes rotation of the roller 6 and, depending on the direction of such rotation, the winding up or unwinding of the sheet 4 around the roller 6. This winding up or unwinding tends to cause the geared motor 10 to move in one direction or the other, to which end it is mounted on a sliding device 11 which moves along the cross-member 2, the said device being constituted (Figure 3) by a rigid surrounding frame 12 provided with balls or bearings 13 which engage the cross-member 2 and are provided with a protective hood 14.

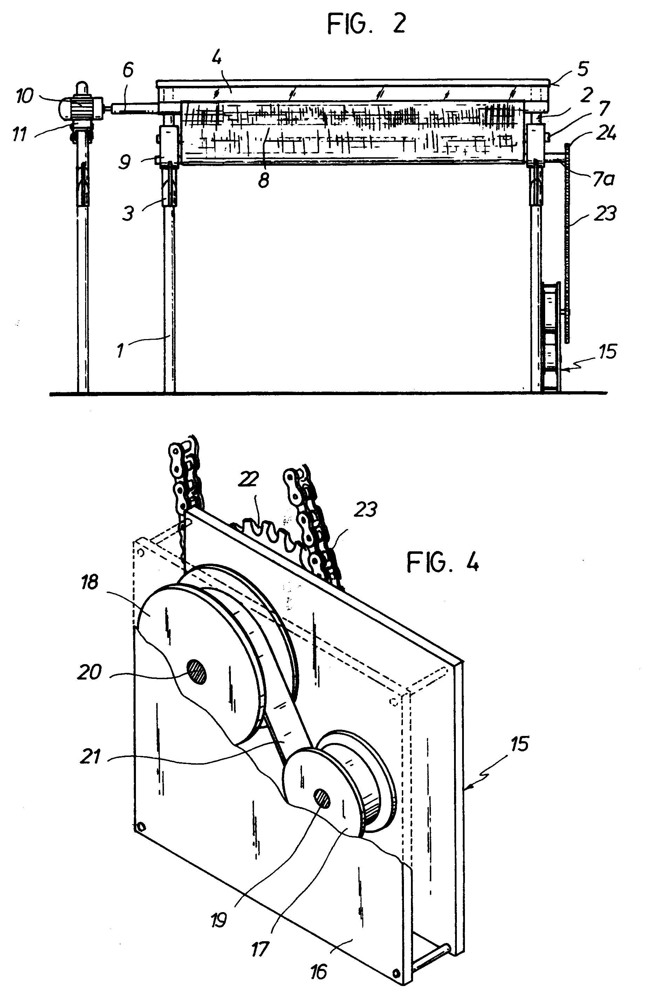

An automatic recovery device 15 (Figure 4) is housed between plates 16 in which there is mounted a primary drum 17 and a secondary drum 18, by way of shafts 19 and 20. A tape 21 has the ends thereof respectively attached to the two drums 17, 18 and there are conventional spring means urging the tape 21 to the position thereof in which it is fully wound up around the primary drum 17.

The shaft 20 of the drum 18 carries a gear wheel 22 which is associated by way of an endless chain 23 with a pinion attached to the rotating bar 7a mounted in a support 24a, fixed to a cross-member 2. The position in which the sheet 4 is fully unwound corresponds to the position in which the tape 21 is fully wound up on the drum 17, while in the remaining positions of the sheet 4, a larger or smaller portion of the tape 21 is wound on the drum 18.

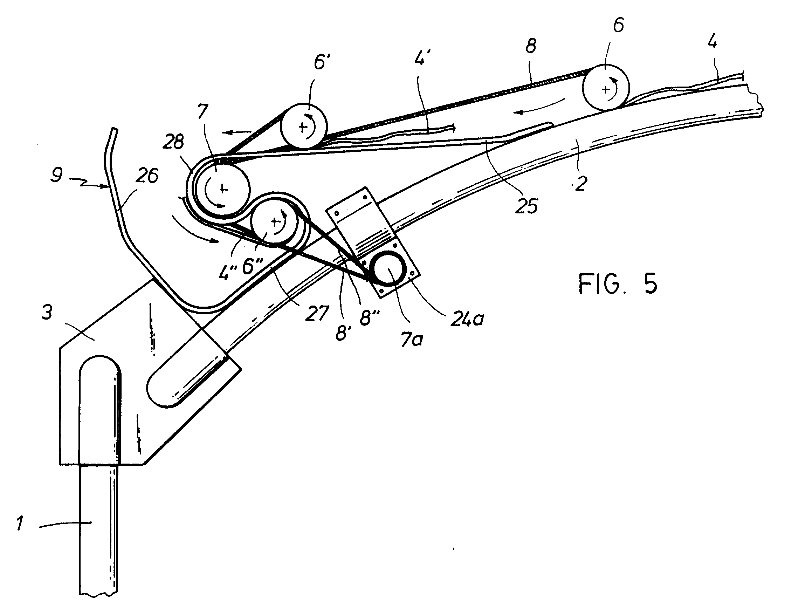

The anchorage member 9 (Figure 5) consists of a flat bar attached to the cross-member 2, forming a sloping plane or sliding entry ramp 25 for the roller 6, a mouth 26 whereby the roller 6 falls under gravity into the section 9, a support bottom 27 and a cavity 28 opposing the path of the roller 6 in the movements thereof in which the roller 6 is temporarily retained in the position in which the sheet 4 is fully unwound.

Hereinafter there is described the operation of the said installation. In the closed roof position, the flexible sheet 4 is fully extended and the roller 6, with the geared motor 10, is located adjacent the guide bar 7 at the lower portion of the arcuate cross-members 2, at the same time as the recovery device 15 has the tape 21 wound up on the primary drum 17. The draw member 8 is in the fully wound-up position around the rotating bar 7a.

To open the roof, the geared motor 10 is set running so that the flexible sheet may be wound up on the roller 6, at the same time as the roller and the geared motor 10 move to the crest of the cross-members 2, whereby the sliding device 11 moves along the corresponding cross-member. Therewith, in the recovery device 15, the tape 21 is drawn by the action of the geared motor 10 and is wound around the secondary drum 18 overcoming the force of the spring means. In turn, the draw member is gradually unwound at one of the ends thereof from the rotating bar 7a, at the same time as the other end is wound on the roller 6 simultaneously with the flexible sheet 4.

Conversely, to close the roof, rotation of the geared motor 10 is reversed and the flexible sheet 4 extends towards the lower portion of the cross-members 2, unwinding from the roller 6, in such a way that in the recovery device 15 the tape 21 passes to the primary drum 17. In this position, said primary drum retains the position in which the sheet 4 is fully unwound, i.e. the closed roof position. Correspondingly, the draw member 8 is unwound from the roller 6 at one of the edges thereof and is wound up on the rotating bar 7a at the other edge.

At the start of the said closed roof position, the roller 6 enters in the anchorage member 9 along the ramp 25, occupying the position 6′ shown in Figure 5, with the sheet in the position 4′ and the draw member in position 8′. Thereafter, the roller reaches the mouth 26 and falls by gravity into the bottom 27, and is thereafter drawn into the cavity 28 in which it is temporarily retained in the position 6˝ with the said draw member in the position 8˝.

## Claims

1. A greenhouse with roll-up roof comprising: a stable structure composed substantially of cross-members (2) arranged transversely between supporting lateral uprights (1); at least one flexible sheet (4) which is capable of being wound up transversely relative to the roof, one of the longitudinal edges of which is attached to a fixed bar (5) and the other longitudinal edge of which is attached to a wind-up roller (6) movable along said cross-members (2) between a position in which the sheet is fully wound up and a position in which it is fully unwound; a geared motor (10) mounted on a device (11) sliding along one of said cross-members (2), said geared motor (10) being provided with a shaft which is attached to one end of said wind-up roller (6), so that rotation in one direction or another of said geared motor (10) shaft respectively causes the winding up or unwinding of the sheet (4) on the roller (6); an automatic recovery device (15) urging the roller (6) to the position in which the sheet (4) is fully unwound; at least one draw member (8) which is attached at one of the ends thereof to said roller (6) around which it is capable of being wound up, and at the other end it is attached to a rotating bar (7a) around which it can be wound up; characterized in that the roof is provided with anchorage members (9), each of which having a sliding ramp (25) for the wind up roller (6), a mouth (26) in which the roller (6) falls while moving to the position in which the sheet (4) is fully unwound, a support bottom (27) and a cavity (28) for temporarily retaining the roller (6) in the position in which the sheet (4) is fully unwound.

2. The greenhouse of claim 1, characterized in that said sliding device (11) comprises a frame (12) containing balls or bearings (13) engaging the cross-member (2) along which the device (11) slides.

3. The greenhouse of any one of claims 1 to 2, characterized in that said automatic recovery device (15) comprises a primary drum (17) and a secondary drum (18), there being a tape (21) the ends of which are respectively attached to said drums (17, 18), there being spring means for urging said tape (21) to a fully wound up position around the primary drum (17).

4. The greenhouse of claim 1 or 3, characterized in that said rotating bar (7a) and said secundary drum (18) are associated by a pinion (24) coaxial with and fixedly attached to said rotating bar (7a); a gear wheel (22) coaxial with and fixedly attached to said secondary drum (18); and an endless chain associating said pinion (24) with said gear wheel (22).

5. The greenhouse of any one of claims 1 to 4, characterized in that said fixed bar (5) is located adjacent one of the longitudinal edges of the roof, whereby a single flexible sheet (4) is adapted to cover a longitudinal sector of the roof.

6. The greenhouse of any one of claims 1 to 5, characterized in that said fixed bar (5) is situated in a centre portion of the roof, whereby one flexible sheet (4) is adapted to cover from the fixed bar (5) to one of the longitudinal edges of the roof and another flexible sheet (4) is adapted to cover from the fixed bar (5) to the other longitudinal edge of the roof.

## Patentansprüche

1. Gewächshaus mit aufrollbarem Dach, welches umfaßt: einen stabilen Aufbau, der im wesentlichen aus Querelementen (2) besteht, die quer zwischen tragenden Seitenpfosten (1) angeordnet sind; wenigstens ein flexibles Tuch (4), die fähig ist, bezüglich des Daches quer aufgewickelt zu werden, wobei eine seiner Längskanten an einer feststehenden Stange (5) angebracht ist und seine andere Kante an einer Aufwickelrolle (6) angebracht ist, die entlang der Querelemente (2) zwischen einer Position, in welcher das Tuch vollständig aufgerollt ist, und einer Position, in welcher es vollständig abgewickelt ist, bewegbar ist; einen Getriebemotor (10), der auf einer Einrichtung (11) angebracht ist, die entlang eines der genannten Querelemente (2) gleitet, wobei der genannte Getriebemotor (10) mit einer Welle versehen ist, die an einem Ende der genannten Aufwickelrolle (6) befestigt ist, so daß die Drehung der genannten Welle des Getriebemotors (10) in eine oder die andere Richtung jeweils das Aufwickeln oder Abwickeln des Tuches (4) auf der Rolle (6) bewirkt; eine automatische Wiederabdeckungseinrichtung (15), die die Rolle (6) in die Position drängt, in der das Tuch (4) vollständig abgewickelt ist; wenigstens ein Zugelement (8), das an seinem einen Ende an der genannten Rolle (6) befestigt ist, um welche herum es fähig ist, aufgewickelt zu werden, und das an seinem anderen Ende an einer sich drehenden Stange (7a) befestigt ist, um welche herum es aufgewickelt werden kann, dadurch gekennzeichnet, daß das Dach mit Verankerungselementen (9) versehen ist, von denen jedes eine Gleitrampe (25) für die Aufwickelrolle (6), eine Öffnung (26), in die die Rolle (6) fällt, während sie sich zu der Position bewegt, in der das Tuch (4) vollständig abgewickelt ist, einen haltenden untersten Teil (27) und einen Hohlraum (28) zum zeitweisen Zurückhalten der Rolle (6) in der Position, in welcher das Tuch (4) vollständig abgewickelt ist, aufweist.

2. Gewächshaus nach Anspruch 1, dadurch gekennzeichnet, daß die genannte Gleiteinrichtung (11) einen Rahmen (12) umfaßt, der Kugeln oder Lager (13) enthält, die an den Querelementen (2) angreifen, entlang derer die Einrichtung (11) gleitet.

3. Gewächshaus nach einem der Ansprüche 1 bis 2, dadurch gekennzeichnet, daß die genannte automatische Wiederabdeckungseinrichtung (15) eine primäre Trommel (17) und eine sekundäre Trommel (18) umfaßt, wobei es ein Band (21) gibt, dessen Enden jeweils an den genannten Trommeln (17, 18) befestigt sind, wobei es eine Federeinrichtung gibt, um das genannte Band (21) in eine vollständig um die primäre Trommel (17) herum aufgewickelte Position zu drängen.

4. Gewächshaus nach Anspruch 1 oder 3, dadurch gekennzeichnet, daß die genannte sich drehende Stange (7a) und die genannte sekundäre Trommel (18) durch ein Kleinrad (24) verbunden sind, das koaxial mit und fest an der genannten sich drehenden Stange (7a) angebracht ist, ein Zahnrad (22) koaxial mit und fest an der genannten sekundären Trommel (18) angebracht ist und eine Endloskette das genannte Kleinrad (24) mit dem genannten Zahnrad (22) verbindet.

5. Gewächshaus nach einem der Ansprüche 1 bis 4, dadurch gekennzeichnet, daß die genannte feststehende Stange (5) einer der Längskanten des Daches benachbart angeordnet ist, wodurch ein einziges flexibles Tuch (4) angepaßt ist, einen Langssektor des Daches zu abzudecken.

6. Gewächshaus nach einem der Ansprüche 1 bis 5, dadurch gekennzeichnet, daß sich die genannte feststehende Stange (5) in einem Mittelabschnitt des Daches befindet, wodurch ein flexibles Tuch (4) angepaßt ist, von der feststehenden Stange (5) bis zu einer der Längskanten des Daches abzudecken, und ein weiteres flexibles Tuch (4) angepaßt ist, von der feststehenden Stange (5) bis zur anderen Längskante des Daches abzudecken.

## Revendications

1. Serre à toit roulant, comprenant une structure stable essentiellement composée de traverses (2) disposées transversalement entre des montants latéraux porteurs (1); au moins une feuille souple (4) qui peut s'enrouler transversalement par rapport au toit, dont l'un des bords longitudinaux est fixé à une barre fixe (5) et dont l'autre bord longitudinal est fixe à un rouleau enrouleur (6) qui peut se déplacer le long desdites traverses (2) entre une position dans laquelle la feuille est entièrement enroulée et une position dans laquelle elle est entièrement déroulée ; un moteur à réducteur (10) monté sur un dispositif (11) qui coulisse le long d'une desdites traverses (2), ledit moteur à réducteur (10) étant muni d'un arbre qui est fixé à une extrémite dudit rouleau enrouleur (6), de sorte que la rotation de l'arbre dudit moteur à réducteur (10) dans un sens ou dans l'autre provoque respectivement l'enroulement de la feuille (4) sur le rouleau (6) ou son déroulement de ce rouleau ; un dispositif de rappel automatique (15) qui rappelle le rouleau (6) à la position dans laquelle la feuille (4) est entièrement déroulée ; au moins un élément de tirage (8) qui est fixé, à l'une de ses extrémités, audit rouleau (6) autour duquel il peut s'enrouler, tandis qu'à l'autre extrémité, il est fixé à une barre tournante (7a) autour de laquelle il peut s'enrouler ; caractérisée en ce que le toit est muni d'éléments d'ancrage (9) dont chacun possède une rampe de glissement (25) pour le rouleau enrouleur (6), une bouche (26) dans laquelle le rouleau (6) tombe en prenant la position dans laquelle la feuille (4) est entièrement déroulée, un fond support (27) et une cavité (28) destinée à retenir temporairement le rouleau (6) dans la position dans laquelle la feuille (4) est entièrement déroulée.

2. Serre selon la revendication 1, caractérisée en ce que ledit dispositif coulissant (11) comprend un cadre (12) contenant des billes ou éléments roulants (13) qui coopèrent avec la traverse (2) le long de laquelle le dispositif (11) coulisse.

3. Serre selon une quelconque des revendications 1 et 2, caractérisée en ce que ledit dispositif de rappel automatique (15) comprend un tambour primaire (17) et un tambour secondaire (18), et une courroie (21) dont les extrémités sont respectivement fixées auxdits tambours (17, 18) cependant qu'il est prévu des moyens élastiques pour tendre à placer ladite courroie (21) dans une position entièrement enroulée autour du tambour primaire (17).

4. Serre selon la revendication 1 ou 3, caractérisée en ce que ladite barre tournante (7a) et ledit tambour secondaire (18) sont associés entre eux par un pignon (24) coaxial à ladite barre tournante (7a) et fixé rigidement à cette barre ; une roue dentée (22) coaxiale audit tambour secondaire (18) et fixée rigidement à ce tambour, et une chaîne sans fin qui accouple ledit pignon (24) à ladite roue dentée (22).

5. Serre selon une quelconque des revendications 1 à 4, caractérisée en ce que ladite barre fixe (5) est placée adjacente à l'un des bords longitudinaux du toit, de sorte qu'une feuille souple unique (4) peut couvrir un secteur longitudinal du toit.

6. Serre selon une quelconque des revendications 1 à 5, caractérisée en ce que ladite barre fixe (5) est située dans une portion centrale du toit, de sorte qu'une feuille souple (4) peut couvrir la distance entre la barre fixe (5) et l'un des bords longitudinaux du toit et qu'une autre feuille souple (4) peut couvrir la distance entre la barre fixe (5) et l'autre bord longitudinal du toit.
